# FASCICULE DE BREVET EUROPEEN

(11) **EP 2 861 457 B1**
(45) Date de publication et mention de la délivrance du brevet: **16.08.2017**
(21) Numéro de dépôt: 13731413.4
(22) Date de dépôt: 11.06.2013
(51) Int. Cl.: B60N 2/46, B60R 7/04

(54) **COMPARTIMENT DE RANGEMENT POUR VEHICULE EQUIPE D'UN ELEMENT DE SEPARATION MOBILE**
STAUFACH FÜR EIN FAHRZEUG MIT EINEM MOBILEN TRENNELEMENT
STORAGE COMPARTMENT FOR A VEHICLE PROVIDED WITH A MOVABLE PARTIONS ELEMENT

(30) Priorité: 15.06.2012 FR 1255651
(43) Date de publication de la demande: 22.04.2015
(73) Titulaire: Faurecia Intérieur Industrie, 92000 Nanterre (FR)
(72) Inventeur: MOREL, Jean-Pierre, F-95650 Boissy L'aillerie (FR); PEREIRA, David, 50226 Frechen (DE)
(74) Mandataire: Cabinet Plasseraud
(86) Numéro de dépôt international: PCT/FR2013/051361
(87) Numéro de publication internationale: WO 2013/186484

(56) Documents cités:
- DE-A1-102008 062 278
- DE-U1-202006 002 100
- GB-A- 2 466 357
- US-A1- 2005 072 889

## Description

La présente invention est relative au domaine des compartiments de rangement agencés à l'intérieur d'un véhicule, par exemple dans l'habitacle du véhicule au niveau d'une console centrale, d'un panneau de porte ou encore d'une planche de bord, ou dans un coffre à bagages du véhicule.

Plus particulièrement, l'invention se rapporte à un compartiment de rangement pour véhicule comprenant :
- un réceptacle présentant un volume intérieur, un fond et une ouverture située à l'opposé du fond ;
- au moins un élément de séparation mobile en coulissement selon une direction de coulissement et adapté pour partitionner le volume intérieur du réceptacle, et ;
- un dispositif de blocage de l'élément de séparation par rapport au réceptacle dans la direction de coulissement, ledit dispositif de blocage comprenant un premier élément de blocage prévu sur l'un du réceptacle et de l'élément de séparation et adapté pour coopérer avec un deuxième élément de blocage complémentaire prévu sur l'autre du réceptacle et de l'élément de séparation.

Le document US20070024075 décrit un exemple d'un tel compartiment de rangement implanté au niveau d'une console centrale du véhicule et dans lequel un élément de séparation est agencé de manière mobile en coulissement à l'intérieur d'un réceptacle et peut être bloqué par rapport à celui-ci dans la direction de coulissement selon trois positions particulières, à savoir une position dans laquelle il dégage sensiblement toute l'ouverture du réceptacle, une position dans laquelle il partitionne l'ouverture en deux moitiés sensiblement égales et une position intermédiaire.

Dans ce document, l'élément de séparation est guidé en coulissement par l'intermédiaire de deux rainures de guidage prévues sur les parois latérales du réceptacle et présentant chacune trois échancrures de positionnement adaptées pour coopérer avec des plots en saillie prévus sur l'élément de séparation pour bloquer celui-ci dans la direction de coulissement.

Pour faire passer l'élément de séparation d'une position à une autre, un occupant du véhicule doit tirer ou pousser sur l'élément de séparation dans la direction de coulissement de sorte à provoquer une déformation élastique des plots et la sortie de ceux-ci en dehors des échancrures de positionnement. Ainsi, le déblocage de l'élément de séparation est effectué en exerçant un effort de traction ou de poussée suivant la direction de coulissement sur l'élément de séparation, cet effort provoquant la déformation élastique d'au moins un des éléments de blocage complémentaires prévus sur les rainures et sur l'élément de séparation.

Un tel système n'est pas sans présenter un certain nombre d'inconvénients.

En particulier, l'effort à exercer sur l'élément de séparation pour le sortir d'une des positions de blocage doit être suffisamment important pour provoquer la déformation élastique des plots de blocage prévus sur l'élément de séparation, ce qui nuit au confort d'utilisation et à l'ergonomie du compartiment de rangement équipé de l'élément de séparation.

Par ailleurs, avec un tel système, les déplacements répétés de l'élément de séparation entre les différentes configurations de partitionnement du volume intérieur du réceptacle risquent de provoquer un matage des éléments de blocage complémentaires prévus sur les rainures et sur l'élément de séparation, pouvant entraîner l'apparition de jeux entre ces éléments. De tels jeux ont pour conséquences un positionnement instable et branlant de l'élément de séparation dans ses configurations de partitionnement, ce qui nuit à la perception de qualité du système et peut en particulier engendrer des bruits de vibration gênant pour les occupants du véhicule.

Le document US2005072889 décrit un autre compartiment de rangement pour véhicule selon le préambule de la revendication 1.

La présente invention a notamment pour but de pallier ces inconvénients.

A cet effet, la présente invention propose un compartiment de rangement du type précité, caractérisé en ce que l'élément de séparation est mobile suivant une direction de déblocage sensiblement perpendiculaire à la direction de coulissement entre une position de blocage dans laquelle le deuxième élément de blocage vient en prise avec le premier élément de blocage et une position de coulissement dans laquelle le deuxième élément de blocage est dégagé du premier élément de blocage, et en ce que le compartiment comprend en outre un élément élastique sollicitant l'élément de séparation vers la position de blocage.

Grâce à ces dispositions, l'invention propose un compartiment de rangement équipé d'un élément de séparation dont la sortie de la position de blocage et le déplacement suivant la direction de coulissement est confortable, ergonomique et nécessite des efforts de manoeuvre réduits pour l'utilisateur.

Par ailleurs, l'invention propose un compartiment de rangement dans lequel le blocage de l'élément de séparation par rapport au réceptacle dans la direction de coulissement est réalisé de manière fiable et durable au cours du temps.

En effet, en ajustant la raideur de l'élément élastique dans la direction de déblocage, on peut définir de manière fine un bon compromis entre l'effort nécessaire au déblocage de l'élément de séparation et l'effort de maintien de l'élément de séparation en position de blocage.

Selon une disposition avantageuse de la présente invention, le compartiment de rangement comprend une pluralité de premiers éléments de blocage régulièrement répartis suivant la direction de coulissement.

De cette manière, l'invention propose un compartiment de rangement équipé d'un élément de séparation pouvant adopter différentes configurations de partitionnement du volume intérieur du réceptacle de manière à pouvoir maintenir à l'intérieur de celui-ci des objets de différentes dimensions reposant sur le fond du réceptacle, tels que des bouteilles ou gobelets présentant des diamètres différents, et dont le déplacement entre les différentes configurations de partitionnement est confortable, ergonomique et nécessite des efforts de manoeuvre réduits pour l'utilisateur.

En effet, pour déplacer l'élément de séparation suivant la direction de coulissement lorsqu'il se trouve en position de blocage dans une première configuration de partitionnement du volume intérieur du réceptacle, l'utilisateur exerce dans un premier temps un effort sur l'élément de séparation pour le déplacer de la position de blocage à la position de coulissement à l'encontre de l'effort exercé par l'élément élastique, puis translate cet élément de séparation selon la direction de coulissement jusqu'à atteindre la configuration de partitionnement du volume intérieur du réceptacle désirée et adaptée au maintien des objets que l'on souhaite placer à l'intérieur du réceptacle. L'utilisateur relâche alors l'effort sur l'élément de séparation et celui-ci est ramené en position de blocage par rapport au réceptacle sous l'effet de la détente de l'élément élastique.

Dans des modes de réalisation préférés de l'invention, on peut en outre éventuellement avoir recours à l'une et/ou à l'autre des dispositions suivantes :
- le réceptacle présente une première et une deuxième parois latérales parallèles, et l'élément de séparation est guidé suivant la direction de coulissement par une première et une deuxième rainures de guidage prévues respectivement sur la première et la deuxième parois latérales du réceptacle, le(s) premier(s) élément(s) de blocage étant prévu(s) au moins sur ladite première rainure, et la direction de déblocage est sensiblement perpendiculaire au fond du réceptacle ;
- la première paroi latérale du réceptacle comprend un rebord s'étendant vers l'intérieur dudit réceptacle et présentant une surface de guidage délimitant l'ouverture, les premiers éléments de blocage sont prévus sur ledit rebord, le deuxième élément de blocage est prévu sur une portion latérale de l'élément de séparation, et l'élément de séparation présente un épaulement définissant une surface d'anti-rotation adaptée pour être en regard de ladite surface de guidage quelle que soit la position de l'élément de séparation par rapport au réceptacle. Grâce à ces dispositions, le guidage de l'élément de séparation par rapport au réceptacle en renforcé à la fois dans la direction de coulissement et dans la direction de déblocage. Par ailleurs, la coopération de la surface de guidage prévue sur le rebord de la paroi latérale du réceptacle et de la surface d'anti-rotation prévue sur le séparateur permet d'empêcher que l'élément de séparation ne pivote autour de l'axe défini par la direction de déblocage par rapport au réceptacle, en particulier lorsqu'il se trouve en position de coulissement, ce qui risquerait de provoquer un coincement de l'élément de séparation dans le réceptacle et/ou un défaut de coopération entre les premiers éléments de blocage prévus sur le réceptacle et le deuxième élément de blocage prévus sur l'élément de séparation. Enfin, le fait que ces deux surfaces de guidage et d'anti-rotation demeurent en regard l'une de l'autre quelle que soit la position relative de l'élément de séparation et du réceptacle permet d'éviter qu'un utilisateur manipulant l'élément de séparation ne vienne se coincer les doigts dans le dispositif de blocage, en particulier lorsque l'élément de séparation se trouve en position de coulissement.
- les premiers éléments de blocage se présentent sous la forme d'une série de crans de blocage formés sur une face de la première rainure, la face opposée de ladite première rainure étant lisse et formant une surface de glissement pour l'élément de séparation, et le deuxième élément de blocage se présente sous la forme d'au moins une saillie de blocage complémentaire prévues sur l'élément de séparation. De cette manière, le compartiment de rangement selon l'invention permet d'offrir un grand nombre de possibilités de positionnement de l'élément de séparation par rapport au réceptacle permettant de s'adapter au plus juste aux dimensions d'un objet placé dans le volume intérieur du réceptacle.
- la surface de glissement de la première rainure comprend une nervure s'étendant dans la direction de coulissement et faisant saillie de ladite surface de glissement selon la direction de déblocage, et adaptée pour coopérer avec une gorge complémentaire prévue sur l'élément de séparation ;
- les crans de la série de crans de blocage sont adjacents dans la direction de coulissement ;
- les crans de blocage et la saillie de blocage présentent un profil triangulaire. Ces profils triangulaires permettent en particulier de compenser un éventuel défaut d'alignement des éléments complémentaires de blocage lorsque l'élément de séparation est ramené vers la position de blocage sous l'effet de l'élément élastique. En variante, on peut prévoir que les crans de blocage et la saillie de blocage présentent un profil arrondi, polygonal ou autre.
- l'élément élastique est solidaire suivant la direction de coulissement de l'élément de séparation et prend appui sur la surface de glissement de la première rainure.
- l'élément élastique se présente sous la forme d'un ressort à lame ;
- l'élément élastique se présente sous la forme d'une lame flexible présentant une première extrémité reliée à l'élément de séparation et une deuxième extrémité libre, ladite lame flexible prenant appui sur la surface de glissement de la première rainure par l'intermédiaire d'une portion extrême voisine de ladite deuxième extrémité ;
- l'élément élastique se présente sous la forme d'un caisson creux déformable ;
- le deuxième élément de blocage est monobloc avec un organe de blocage fixé sur l'élément de séparation au moyen d'un dispositif d'assemblage, tel qu'un assemblage en queue d'aronde, et/ou l'élément élastique est monobloc avec un organe élastique fixé sur l'élément de séparation au moyen d'un dispositif d'assemblage, tel qu'un assemblage en queue d'aronde. Ainsi, on pourra prévoir d'adapter à leur fonction respective les matériaux constitutifs de l'élément élastique, du deuxième élément de blocage et de l'élément de séparation. Par exemple, l'organe élastique peut être réalisé en élastomère ou autre matériau souple présentant l'élasticité / la raideur permettant d'obtenir le compromis recherché entre l'effort nécessaire au déblocage de l'élément de séparation et l'effort de maintien de l'élément de séparation en position de blocage. L'organe de blocage quant à lui peut être réalisé en un matériau relativement dur / rigide de sorte à assurer un blocage robuste de l'élément de séparation en position de blocage par coopération avec les premiers éléments de blocage prévus sur le réceptacle. Enfin, l'élément de séparation en lui-même étant destiné à être manipulé par un utilisateur peut être réalisé en un matériau suffisamment rigide pour supporter cette manipulation sans déformation excessive, tout en présentant un toucher doux.
- l'élément élastique prend appui sur la surface de glissement de la première rainure par l'intermédiaire d'un patin de glissement monté mobile en rotation sur l'élément de séparation.
- l'élément élastique se présente sous la forme d'une patte flexible comprenant une première extrémité reliée au patin de glissement et une deuxième extrémité libre, ladite patte flexible prenant appui sur l'élément de séparation par l'intermédiaire d'une portion extrême voisine de ladite deuxième extrémité.
- l'élément de séparation passe de la position de blocage à la position de coulissement en étant déplacé vers le fond du réceptacle ;
- le compartiment de rangement comprend une pluralité d'éléments de séparation. La pluralité d'éléments de séparation permet d'offrir un plus grand nombre de configurations différentes pour le partitionnement du volume intérieur du réceptacle.

Par ailleurs, l'invention porte également sur un véhicule comprenant un compartiment de rangement tel que décrit précédemment.

On peut, en outre, définir une gamme de véhicules comprenant un premier ensemble de véhicules comprenant un compartiment de rangement muni d'un élément de séparation et d'au moins un deuxième ensemble de véhicules comprenant un compartiment de rangement muni d'une pluralité d'éléments de séparation.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective d'un compartiment de rangement selon l'invention comportant un unique élément de séparation ;
- les figures 1a et 1b sont des vues partielles en coupe selon la ligne I-I de la figure 1 illustrant respectivement l'élément de séparation en position de blocage et en position de coulissement par rapport au réceptacle du compartiment de rangement selon l'invention ;
- les figures 2a à 2c illustrent en vue de dessus trois exemples d'utilisation d'une variante de compartiment de rangement selon l'invention comportant deux éléments de séparation ;
- les figures 3a et 3b sont des vues partielles en coupe selon la ligne III-III de la figure 1 visant à illustrer des détails du compartiment de rangement selon l'invention, l'élément de séparation se trouvant respectivement en position de blocage et en position de coulissement par rapport au réceptacle ;
- les figures 4a à 4c sont des vues analogues à celle de la figure 1a visant à illustrer une variante de réalisation de l'élément de séparation et différentes formes de réalisation de l'élément élastique ;
- les figures 5a et 5b sont des vues analogues à celle de la figure 3b visant à illustrer des variantes de réalisation du compartiment de rangement selon l'invention dans lesquelles l'élément élastique est intercalé entre l'élément de séparation et un patin de glissement monté mobile en pivotement sur l'élément de séparation.

Sur les différentes figures, les mêmes références désignent des éléments identiques ou similaires.

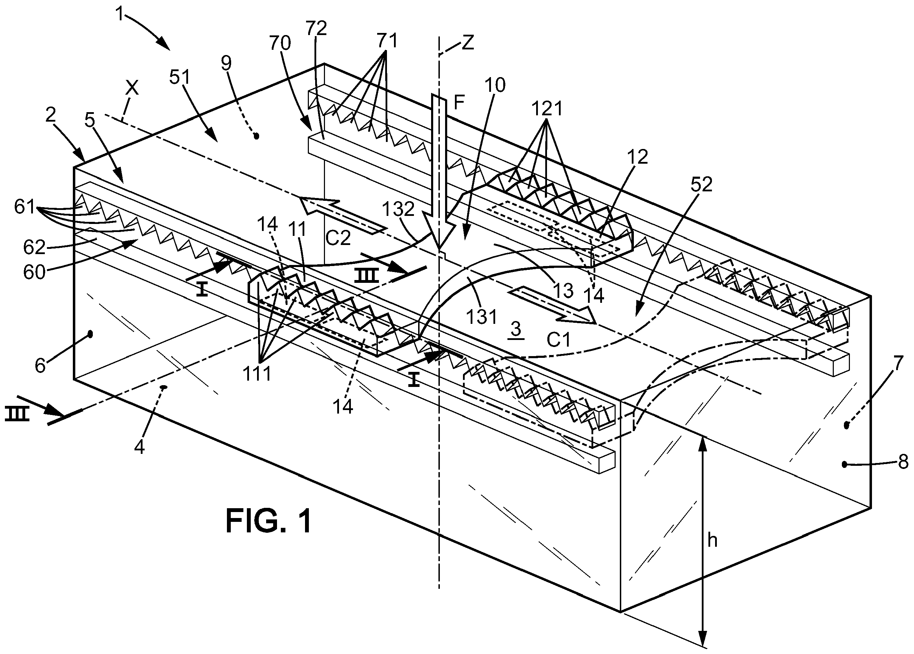

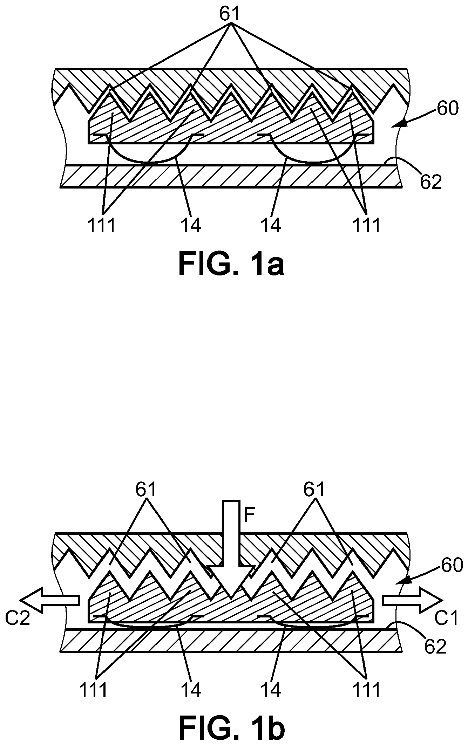

Sur la figure 1, on a représenté un compartiment de rangement 1 selon l'invention qui peut être agencé à l'intérieur d'un véhicule automobile, par exemple dans l'habitacle de celui-ci, au niveau d'un console centrale s'étendant entre les sièges avant du véhicule, au niveau d'une planche de bord ou encore au niveau d'un panneau de porte avant ou arrière du véhicule, et qui est adapté pour recevoir différents objets, et en particulier des bouteilles ou gobelets de différentes dimensions.

Ce compartiment 1 comprend un réceptacle 2 présentant un volume intérieur 3 de réception des objets, un fond 4 et une ouverture supérieure 5 située à l'opposé du fond 4. Ce réceptacle 2, de forme globalement parallélépipédique, présente également deux parois latérales parallèles 6, 7, ainsi qu'une paroi avant 8 et une paroi arrière 9, lesdites parois latérales 6, 7, avant 8 et arrière 9 délimitant avec le fond 4 le volume intérieur 3 du réceptacle 2 (pour des raisons de clarté, la paroi latérale 6 et la paroi avant 8 du réceptacle 2 ont été représentées en transparence sur la figure 1).

Dans l'exemple de réalisation illustré sur cette figure 1, le réceptacle 2 est équipé d'un unique élément de séparation 10 agencé de manière mobile par rapport au réceptacle 2 selon une direction de coulissement X parallèle aux parois latérales 6, 7 du réceptacle, de sorte à partitionner le volume intérieur 3 de celui-ci.

Plus particulièrement, l'élément de séparation se présente sous la forme d'une platine de séparation 10 agencée de manière mobile en coulissement entre les parois latérales 6, 7 du réceptacle 2, au voisinage de l'ouverture 5 dans l'exemple de réalisation illustré, et pouvant être bloquée en coulissement selon différentes configurations dans lesquelles ladite platine 10 divise ou partitionne le volume intérieur 3 du réceptacle 2 au niveau de ladite ouverture 5.

A cet effet, les parois latérales 6, 7 du réceptacle 2 sont chacune pourvues d'une rainure de guidage 60, 70 s'étendant au voisinage de l'ouverture 5, entre les parois avant et arrière 8, 9 du réceptacle 2, et adaptées pour recevoir respectivement une portion latérale 11, 12 de la platine de séparation 10.

Le compartiment de rangement 1 selon l'invention comprend par ailleurs un dispositif de blocage de l'élément de séparation 10 par rapport au réceptacle 2 dans la direction de coulissement X permettant d'immobiliser ledit élément de séparation 10 selon différentes configurations de partitionnement du volume intérieur 3 du réceptacle 2.

Comme visible sur les figures 1, 1a et 1b, le dispositif de blocage comprend des premiers éléments de blocage se présentant sous la forme d'une série continue de crans de blocage 61, 71 de profil triangulaire adjacents formés sur la face supérieure de chaque rainure de guidage 60, 70 prévues sur les parois du réceptacle 2, et régulièrement répartis selon la direction de guidage X. Ces crans de blocage 61, 71, qui forment ensemble une sorte de crémaillère sur la face supérieure de chaque rainure 60, 70, sont adaptés pour coopérer par complémentarité de forme avec des deuxièmes éléments de blocage se présentant sous la forme de saillies de blocage 111, 121 de profil triangulaire prévues au niveau des faces supérieures des portions latérales 11, 12 de la platine de séparation 10.

Dans le mode de réalisation illustré, chacune des rainures de guidage 60, 70 est pourvue d'une série de crans de blocage 61, 71 et chacune des portions latérales 11, 12 de la platine de séparation 10 est équipée de saillies de blocage 111, 121 complémentaires. Cependant, on pourrait envisager de ne prévoir une telle série de crans de blocage qu'au niveau d'une des rainures de guidage, l'autre rainure ayant alors des faces lisses et ne servant qu'au guidage de la platine de séparation 10 ; seule une portion latérale de la platine de séparation 10 sera alors équipée des saillies de blocage complémentaires.

Par ailleurs, dans le mode de réalisation illustré, les portions latérales 11, 12 de la platine de séparation 10 sont chacune pourvues de sept saillies de blocage 111, 121 adaptées pour coopérer avec des crans de blocage complémentaires 61, 71 prévus sur les rainures de guidage 60, 70 du réceptacle. Bien qu'il soit avantageux de prévoir une pluralité de saillies de blocage sur la platine de séparation 10, notamment en termes de stabilité du blocage de la platine 10 par rapport au réceptacle 2, on pourrait ne prévoir qu'une unique saillie de blocage sur chacune des portions latérales 11, 12 de la platine 10 pour réaliser la fonction de blocage de la platine 10 par rapport au réceptacle 2 dans la direction de coulissement X.

Selon l'invention, la platine de séparation 10 est également mobile suivant une direction de déblocage Z sensiblement perpendiculaire à la direction de coulissement X entre une position de blocage dans laquelle les saillies de blocage 111, 121 de la platine 10 viennent en prise avec les crans de blocage 61, 71 des rainures de guidage 60, 70 du réceptacle 2, et une position de coulissement dans laquelle lesdites saillies 111, 121 sont dégagées desdits crans 61, 71, et la platine 10 peut être déplacée selon la direction de coulissement X par rapport au réceptacle 2.

Ces positions de blocage et de coulissement sont respectivement illustrées aux figures 1a et 1b qui représentent des vues partielles en coupe selon la ligne I-I de la figure 1 montrant la coopération d'une portion latérale 11 de la platine de séparation 10 avec une rainure de guidage associée 60 du réceptacle 2. On comprendra que l'autre portion latérale 12 de la platine de séparation 10 coopère de la même manière avec la rainure de guidage associée 70 du réceptacle 2.

Comme bien visible sur les figures 1, 1a et 1b, les faces inférieures des portions latérales 11, 12 de la platine de séparation 10 sont chacune équipées de deux éléments élastiques 14 sollicitant la platine de séparation 10 vers la position de blocage. Sur les figures précitées, les éléments élastiques se présentent sous la forme de ressorts à lame 14 solidaires des portions latérales 11, 12 de la platine de séparation 10 suivant la direction de coulissement X et présentant des portions centrales convexes prenant appui sur les faces inférieures lisses des rainures de guidage associées 60, 70, ces faces inférieures formant des surfaces de glissement 62, 72 pour la platine de séparation 10 en position de coulissement.

Ainsi, lorsqu'un occupant du véhicule désire par exemple faire passer la platine de séparation 10 de sa configuration illustrée en traits pleins à la figure 1, et dans laquelle ladite platine 10 divise l'ouverture 5 du réceptacle 2 en deux parties d'ouvertures distinctes 51, 52 sensiblement égales, à la configuration illustrée en traits mixtes à la figure 1, et dans laquelle la platine de séparation 10 se trouve au voisinage de la paroi avant 8 du réceptacle 2 et dégage essentiellement l'ouverture 5, il exerce dans un premier temps un effort F sur la platine 10 de manière à déplacer celle-ci vers le fond 4 du réceptacle 2 à l'encontre de l'effort exercé par les ressorts à lames 14.

Au cours de ce déplacement, les ressorts à lames 14 sont comprimés en prenant appui sur les faces inférieures lisses des rainures de guidage 11, 12, et les saillies de blocage 111, 121 de la platine de séparation 10 sortent des crans de blocage 61, 71 prévus sur les faces supérieures des rainures de guidage 11, 12.

La platine de séparation 10 se trouve alors dans la position de coulissement illustrée à la figure 1b, et l'occupant du véhicule, maintenant l'effort F, peut librement déplacer la platine 10 par rapport au réceptacle dans la direction de coulissement X selon les flèches C1 et C2 illustrées, jusqu'à atteindre la configuration désirée de partitionnement de l'ouverture 5 (ici la configuration dans laquelle la platine de séparation 10 se trouve au voisinage de la paroi avant 8 du réceptacle 2 et dégage essentiellement l'ouverture 5).

L'occupant du véhicule relâche alors l'effort F, et la platine de séparation 10 est déplacée à l'opposé du fond 4 du réceptacle sous l'effet de la détente des lames ressort 14, et les saillies de blocage 111, 121 viennent en prise avec les crans de blocage 61, 71 des rainures de guidage 60, 70 pour bloquer la platine de séparation 10 dans la direction de coulissement X dans la configuration désirée de partitionnement de l'ouverture 5 du réceptacle 2.

Le fait de prévoir une série continue de crans de blocage 61, 71 adjacents, régulièrement répartis suivant la direction de coulissement X, sur les faces supérieures des rainures de guidage 60, 70 du réceptacle 2 permet d'offrir à l'occupant du véhicule la possibilité de positionner la platine de séparation 10 selon un grand nombre de configurations de partitionnement de l'ouverture 5 du réceptacle 2, et de définir ainsi des parties d'ouverture dont les dimensions sont adaptées au maintien d'objets de différentes dimensions, tels que des bouteilles ou gobelets de différents diamètres, reposant sur le fond 4 du réceptacle 5 et faisant saillie à travers l'ouverture 5. La série continue de crans de blocage 61, 71 adjacents, régulièrement répartis suivant la direction de coulissement X, permet en outre au compartiment de rangement selon l'invention d'être équipé d'une pluralité de platines de séparation 10 de manière simple. En effet, aucune adaptation spécifique du compartiment de rangement 1 et notamment du dispositif de blocage n'est nécessaire pour équiper le compartiment de rangement 1 avec une ou une pluralité de platines de séparation 10, 10'.

Par ailleurs, le profil triangulaire des crans de blocage 61, 71 prévus sur les rainures 60, 70 du réceptacle 2 et des saillies complémentaires 111, 121 prévues sur la platine de séparation 10, permet de compenser un éventuel défaut d'alignement entre ces éléments lorsque l'occupant du véhicule relâche l'effort F exercé sur la platine 10 pour la déplacer en position de coulissement et que celle-ci est ramenée vers la position de blocage sous l'effet des ressorts à lame 14.

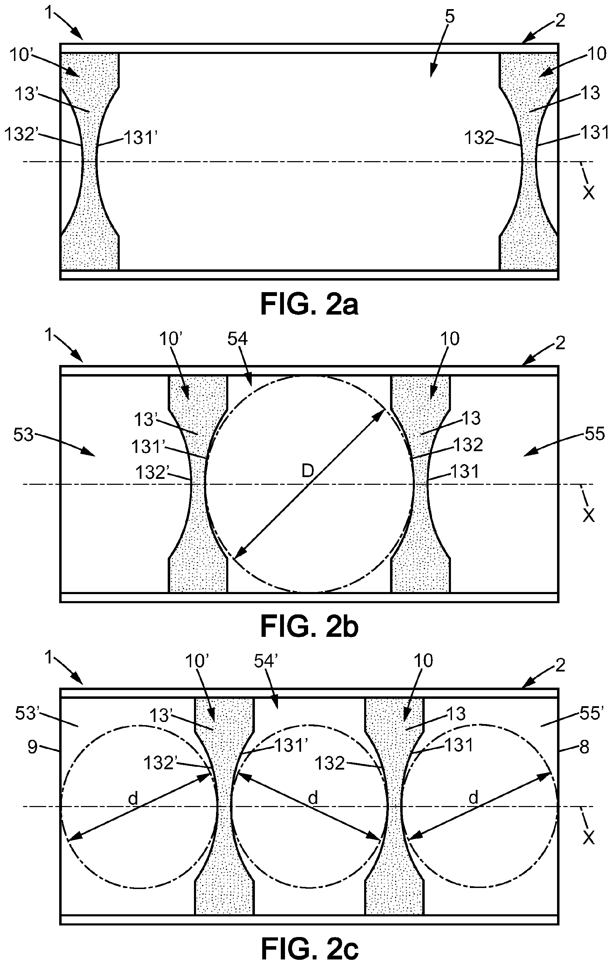

Sur les figures 2a à 2c, on a illustré de manière schématique en vue de dessus un compartiment de rangement 1 selon l'invention équipé de deux platines de séparation 10, 10' positionnées par rapport au réceptacle 2 selon différentes configurations de partitionnement de son ouverture 5. Avantageusement, les platines de séparation 10, 10' sont identiques, ce qui est particulièrement intéressant d'un point de vue coût.

Ainsi, sur la figure 2a, les platines de séparation 10, 10' sont positionnées et bloquées par rapport au réceptacle 2 de manière à dégager au maximum l'ouverture 5 et autoriser un accès optimal au volume intérieur du réceptacle 2 pour prélever et/ou y placer des objets.

Sur la figure 2b, les platines de séparation 10, 10' ont été déplacées dans la direction de coulissement X et bloquées par rapport au réceptacle 2 de manière à diviser l'ouverture 5 en trois parties d'ouverture 53, 54, 55, dont la partie centrale 54 est adaptée pour recevoir un objet tel qu'une bouteille représentée en trait mixtes présentant un certain diamètre D, reposant sur le fond du réceptacle et étant maintenue dans la direction de coulissement X par les platines de séparation 10, 10'.

Sur la figure 2c, les platines de séparation 10, 10' ont été déplacées dans la direction de coulissement X et bloquées par rapport au réceptacle 2 de manière à diviser l'ouverture 5 en trois parties d'ouverture 53', 54', 55' de dimensions sensiblement égales et adaptées pour recevoir chacune un objet tel qu'un gobelet représenté en trait mixtes présentant un certain diamètre d, reposant sur le fond du réceptacle et étant maintenu dans la direction de coulissement X soit entre les platines de séparation 10, 10', soit entre une platine de séparation 10, 10' et la parois avant ou arrière 8, 9 du réceptacle 2.

Comme visible sur les figures 1 et 2a à 2c, la ou les platines de séparation 10, 10' présentent avantageusement dans leur portions centrales 13, 13' des échancrures 131, 132, 131', 132' en forme d'arc de cercle adaptées pour épouser au moins partiellement le contour des objets placés à l'intérieur du réceptacle 2 tels que des bouteilles ou gobelets de différents diamètres.

Bien que dans l'exemple de réalisation illustré, les rainures de guidage 60, 70 de la ou des platines de séparation 10, 10' aient été prévues au voisinage de l'ouverture 5 du réceptacle 2 de manière à ce que lesdites platines de séparation 10, 10' permettent de maintenir et bloquer dans la direction de coulissement X des objets reposant sur le fond 4 du réceptacle et faisant saillie à travers l'ouverture 5, on pourrait envisager de positionner ces rainures 60, 70, et donc la ou les platines de séparation 10, 10', plus en direction du fond 4 du réceptacle 2, et notamment à la moitié de la hauteur h du réceptacle 2 de manière à ce que lesdites platines de séparation 10, 10' permettent de maintenir et bloquer dans la direction de coulissement X des objets reposant sur le fond 4 du réceptacle et ne faisant pas forcément saillie à travers l'ouverture 5.

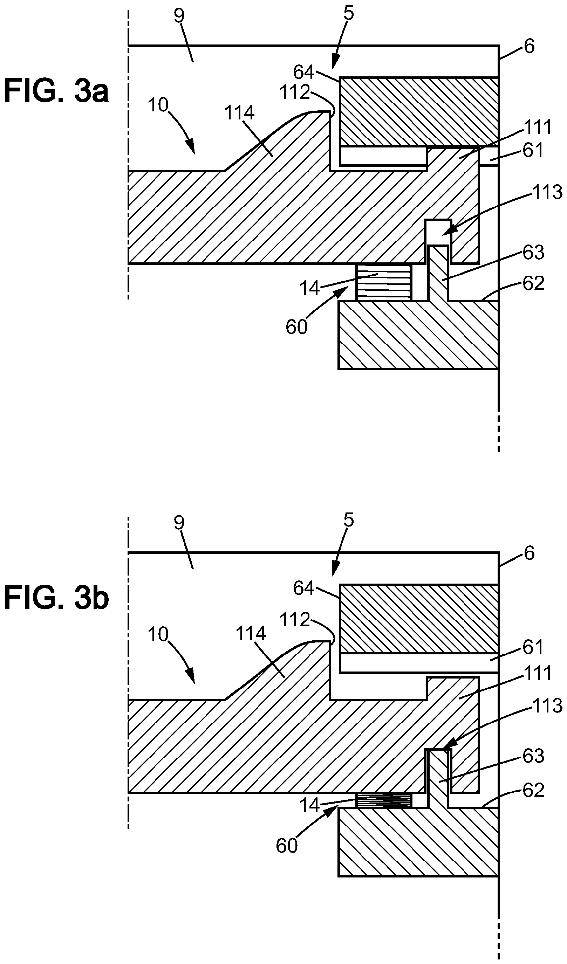

On va maintenant décrire des détails du compartiment de rangement selon l'invention en référence avec les figures 3a et 3b sur lesquelles l'élément de séparation 10 se trouve respectivement en position de blocage et en position de coulissement par rapport au réceptacle 2.

Plus précisément, ces figures 3a et 3b visent à illustrer des détails du guidage de l'élément de séparation 10 dans son déplacement par rapport au réceptacle dans les directions de déblocage Z et de coulissement X.

Bien que ces figures 3a et 3b illustrent ce guidage au niveau d'une des rainures de guidage, on comprendra que, par symétrie, il peut en être de même pour l'autre des rainures de guidage.

Ainsi, on observe sur ces figures 3a et 3b que la surface de glissement 62 de la première rainure 60 peut avantageusement être pourvue d'une nervure 63 s'étendant longitudinalement dans la direction de coulissement X et faisant saillie de cette surface de glissement 62 dans la direction de déblocage Z. La nervure 63 ainsi formée sur la surface de glissement 62 est adaptée pour être reçue à l'intérieur d'une gorge complémentaire 113 prévue sur l'élément de séparation 10, et plus précisément dans le cas d'espèce au niveau d'une face inférieure de la portion latérale 11 de l'élément de séparation 10.

La mise en oeuvre d'un tel système de nervure 63 reçue à l'intérieur d'une gorge 113 permet notamment de renforcer le guidage l'élément de séparation 10 dans son déplacement par rapport au réceptacle dans les directions de déblocage Z et de coulissement X.

Par ailleurs, la nervure 63 peut également faire office de butée pour le déplacement de l'élément de séparation 10 dans la direction de déblocage Z par contact avec le fond de la gorge 113 tel qu'illustré à la figure 3b.

Par ailleurs, toujours en relation avec les figures 3a et 3b, on observe que la paroi latérale 6 du réceptacle 2 comprend un rebord s'étendant vers l'intérieur du réceptacle 2 et présentant une surface de guidage 64 délimitant l'ouverture 5 de ce réceptacle 2. Les premiers éléments de blocage 61 sont prévus sur ce rebord. L'élément de séparation 10 est quant à lui pourvu d'un épaulement défini par une saillie 114 s'étendant longitudinalement dans la direction de coulissement X et faisant saillie de la face supérieure de l'élément de séparation 10 dans la direction de déblocage Z. Cet épaulement définit sur l'élément de séparation 10 une surface d'anti-rotation 112 adaptée pour se trouver en regard de la surface de guidage 64 définie sur le rebord de la paroi latérale 6 de sorte à empêcher que l'élément de séparation ne pivote autour de l'axe défini par la direction de déblocage Z, en particulier lorsque l'élément de séparation 10 se trouve en position de coulissement par rapport au réceptacle 2, pivotement qui serait susceptible de provoquer un coincement de l'élément de séparation 10 dans la direction de coulissement X.

Par ailleurs, et comme on peut le constater sur les figures 3a et 3b, le dimensionnement et/ou le positionnement relatif de la surface de guidage 64 et de la surface anti-rotation 112 sont choisis de sorte que la surface de guidage 64 se trouve en regard de la surface anti-rotation 112 quelle que soit la position de l'élément de séparation 10 par rapport au réceptacle 2, en particulier dans la direction de déblocage Z. Une telle disposition s'avère particulièrement avantageuse afin d'éviter qu'un utilisateur manipulant l'élément de séparation 10 puisse accéder au dispositif de blocage formé des crans 61 prévus sur la rainure 60 et des saillies 111 prévues sur la portion latérale 11 de l'élément de séparation 10, et vienne se coincer les doigts à l'intérieur de celui-ci, en particulier lorsque l'élément de séparation 10 se trouve en position de coulissement par rapport au réceptacle 2. Par ailleurs, on limite ainsi le risque d'incursion d'éléments étrangers à l'intérieur du dispositif de blocage, éléments qui risqueraient de perturber le bon fonctionnement de ce dispositif de blocage.

De la même manière, et tel qu'on peut l'observer sur ces figures 3a et 3b, on pourra dimensionner la nervure 63 et la gorge 113 de sorte que cette nervure 63 demeure au moins partiellement logée à l'intérieur de la gorge 63 quelle que soit la position relative de l'élément de séparation 10 et du réceptacle 2, en particulier dans la direction de déblocage Z.

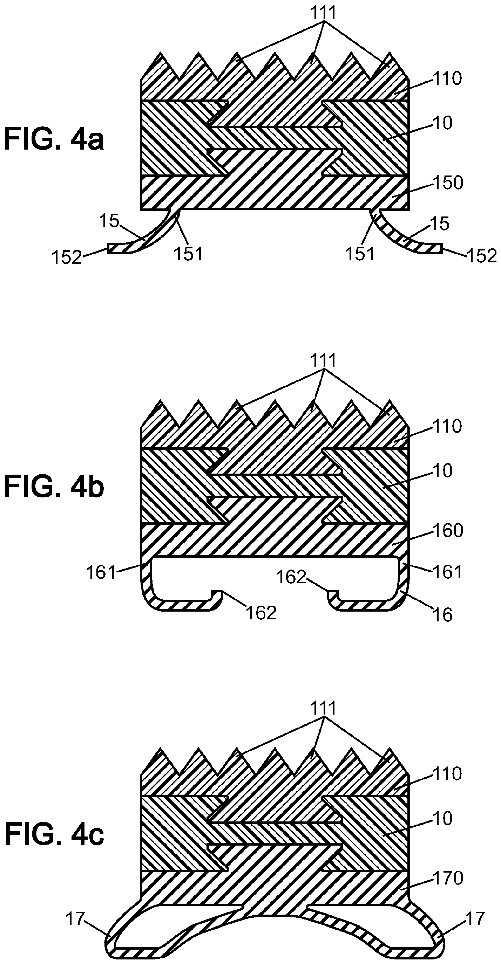

Les figures 4a à 4c illustrent une variante de réalisation de l'élément de séparation 10 constituant une alternative à l'élément de séparation 10 illustré sur les figures 1, 1a et 1b. Sur ces figures 4a à 4c, analogues à la figure 1a, la rainure 60 n'est pas représentée. Dans cette variante de réalisation, les deuxièmes éléments de blocage se présentant sous la forme de saillies triangulaire 111, 121 appartiennent à un organe de blocage et les éléments élastiques appartiennent à un organe élastique, cet organe de blocage et cet organe élastique étant rapportés sur les portions latérales 11, 12 de l'élément de séparation 10,

Plus précisément, selon cette variante de réalisation, et comme visible sur ces figures 4a à 4c, les saillies de blocage 111 sont monobloc avec un organe de blocage 110 fixé au niveau d'une portion latérale 11 de l'élément de séparation 10 au moyen d'un dispositif d'assemblage en queue d'aronde. Dans cette variante de réalisation, l'organe de blocage 110 et l'élément de séparation 10 peuvent avantageusement être réalisés dans des matériaux différents adaptés à leur fonction respective.

De la même manière, selon cette variante de réalisation, les éléments élastiques 15, 16, 17 sont monobloc avec un organe élastique 150, 160, 170 fixé au niveau d'une portion latérale 11 de l'élément de séparation 10 au moyen d'un dispositif d'assemblage en queue d'aronde. Dans cette variante de réalisation, l'organe élastique 150, 160, 170 et l'élément de séparation 10 peuvent avantageusement être réalisés dans des matériaux différents adaptés à leur fonction respective.

Par ailleurs, les figures 4a à 4c diffèrent les unes des autres par la forme des éléments élastiques 15, 16, 17 portés par chacun l'organe élastique 150, 160, 170.

Ainsi, sur les figures 4a et 4b, chacun des deux éléments élastiques implantés au niveau de la portion latérale 11 de l'élément de séparation 10 se présente sous la forme d'une lame élastique 15, 16 présentant une première extrémité 151, 161 reliée à l'élément de séparation 10 par l'intermédiaire de l'organe élastique associé 150, 160 et une deuxième extrémité libre 152, 162.

Chacune de ces lames élastiques 15, 16 est destinée à venir en appui sur la surface de glissement 62 de la rainure 60 associée par l'intermédiaire d'une portion extrême située au voisinage de leur extrémité libre 152, 162.

Dans la variante de réalisation illustrée à la figure 4a, les lames élastiques 15 mises en oeuvre s'étendent vers l'avant et vers l'arrière de l'élément de séparation 10 dans la direction de coulissement X et leurs extrémités libres 152 s'étendent à l'écart l'une de l'autre dans cette direction de coulissement X. Une telle disposition des lames élastiques 15 permet de favoriser la stabilité de l'élément de séparation 10.

Dans la variante de réalisation illustrée à la figure 4b, les lames élastiques 16 mises en oeuvre s'étendent vers le centre de l'élément de séparation 10 dans la direction de coulissement X et leurs extrémités libres 152 s'étendent sensiblement en regard l'une de l'autre dans cette direction de coulissement X. Une telle disposition des lames élastiques 16 permet de favoriser la compacité de l'élément de séparation 10 dans la direction de coulissement X.

Enfin, dans la variante de réalisation illustrée à la figure 4c, les éléments élastiques mis en oeuvre se présentent sous la forme de caissons creux déformables 17. Ces caissons creux 17 présentant un contour fermé, ils permettent de limiter le risque d'incursion d'éléments étrangers susceptibles d'entraver le déplacement de l'élément de séparation 10, en particulier dans la direction de déblocage Z.

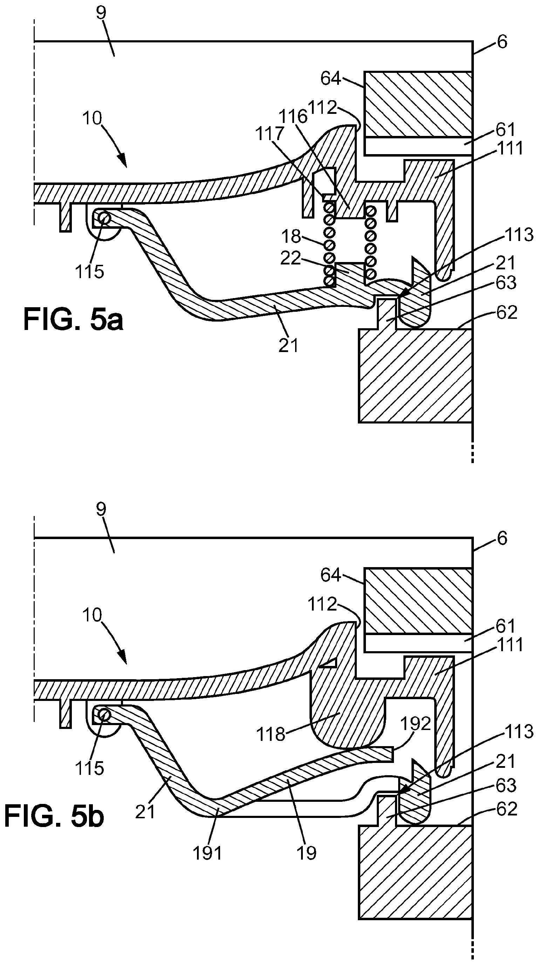

Les figures 5a et 5b illustrent selon des vues analogues à celle de la figure 3b, deux variantes de réalisation du compartiment de rangement selon l'invention dans lesquelles le ou les éléments élastiques mis en oeuvre ne sont pas directement en appui sur les surfaces 62, 72 de glissement définies au niveau des rainures 60, 70.

Plus précisément, dans ces deux variantes de réalisation de l'invention, les éléments élastiques mis en oeuvre dans le compartiment de rangement ne prennent pas appui directement sur les surfaces de glissement définies sur les rainures, mais par l'intermédiaire d'un patin de glissement monté mobile en rotation sur l'élément de séparation 10.

Ainsi, et comme visible sur ces figures 5a et 5b représentant partiellement l'élément de séparation 10 en position de coulissement par rapport au réceptacle 2, un patin de glissement 21 est monté en rotation sur un axe 116 porté par l'élément de séparation 10 et s'étendant dans la direction de coulissement X dans les exemples de réalisation représentés sur ces figures. En variante, on peut prévoir que l'axe 116 s'étende dans une direction latérale perpendiculaire aux directions de coulissement X et de déblocage Z, l'essentiel étant que le patin de glissement 21 présente une mobilité selon la direction de déblocage Z par rapport à l'élément de séparation 10.

On notera par ailleurs que dans ces deux variantes de réalisation illustrées sur les figure 5a et 5b, la gorge 113 logeant la nervure 63 prévue sur la surface de glissement 62 est définie sur le patin de glissement 63, ce qui permet de renforcer le guidage de ce patin 21 dans la direction de coulissement X, le patin 21 étant maintenu en contact de la surface de glissement 62 et de la nervure 63 par l'élément élastique tel que cela sera décrit plus en détails par la suite.

Dans ces deux variantes de réalisation illustrées sur les figure 5a et 5b, l'élément élastique s'étend entre l'élément de séparation 10 et le patin de glissement 21 et sollicite ces deux éléments en écartement l'un de l'autre dans la direction de déblocage Z.

Dans la variante de réalisation illustrée à la figure 5a, l'élément élastique se présente sous la forme d'un ressort hélicoïdal 18 reçu dans un espace intérieur défini par l'élément de séparation 10 et le patin de glissement 21, et dont le débattement selon la direction de déblocage Z et guidé au moyen d'un plot 22 prévu sur le patin de glissement 21 et d'un plot 115 pourvu d'une collerette d'appui 117 prévu sur l'élément de séparation 10.

Dans la variante de réalisation illustrée à la figure 5b, l'élément élastique se présente sous la forme d'une patte flexible 19 reliée, et ici monobloc avec le patin de glissement 21. Cette patte flexible 19 présente une première extrémité 191 reliée au patin de glissement 21 et une deuxième extrémité 192 libre. La patte flexible 19 formant l'élément élastique de cette variante de réalisation prend appui sur un plot d'appui 118 prévu sur l'élément de séparation 10 au niveau d'une portion extrême voisine de la deuxième extrémité 192.

## Revendications

1. Compartiment de rangement (1) pour véhicule comprenant :
- un réceptacle (2) présentant un volume intérieur (3), un fond (4) et une ouverture (5) située à l'opposé du fond (4) ;
- au moins un élément de séparation (10, 10') mobile en coulissement selon une direction de coulissement (X) et adapté pour partitionner le volume intérieur (3) du réceptacle (2), et ;
- un dispositif de blocage de l'élément de séparation (10, 10') par rapport au réceptacle dans la direction de coulissement (X), ledit dispositif de blocage comprenant un premier élément de blocage (61, 71) prévu sur l'un du réceptacle (2) et de l'élément de séparation (10, 10') et adaptés pour coopérer avec un deuxième élément de blocage complémentaire (111, 121) prévu sur l'autre du réceptacle (2) et de l'élément de séparation (10, 10') ;
**caractérisé en ce que** l'élément de séparation (10, 10') est mobile suivant une direction de déblocage (Z) sensiblement perpendiculaire à la direction de coulissement (X) entre une position de blocage dans laquelle le deuxième élément de blocage (111, 121) vient en prise avec le premier élément de blocage (61, 71) et une position de coulissement dans laquelle le deuxième élément de blocage (111, 121) est dégagé du premier élément de blocage (61, 71),
et **en ce que** le compartiment (1) comprend en outre un élément élastique (14, 15, 16, 17, 18, 19) sollicitant l'élément de séparation (10, 10') vers la position de blocage.

2. Compartiment de rangement (1) selon la revendication 1, comprenant une pluralité de premiers éléments de blocage (61, 71) régulièrement répartis dans la direction de coulissement (X).

3. Compartiment de rangement (1) selon la revendication 2, dans lequel le réceptacle (2) présente une première et une deuxième parois latérales parallèles (6, 7), dans lequel l'élément de séparation (10, 10') est guidé suivant la direction de coulissement (X) par une première et une deuxième rainures de guidage (60, 70) prévues respectivement sur la première et la deuxième parois latérales (6, 7) du réceptacle (2), les premiers éléments de blocage (61, 71) étant prévus au moins sur ladite première rainure (60, 70), et dans lequel la direction de déblocage (Z) est sensiblement perpendiculaire au fond (4) du réceptacle (2).

4. Compartiment de rangement (1) selon la revendication 3, dans lequel :
- la première paroi latérale (6) du réceptacle (2) comprend un rebord s'étendant vers l'intérieur dudit réceptacle (2) et présentant une surface de guidage (64) délimitant l'ouverture (5),
- les premiers éléments de blocage (61) sont prévus sur ledit rebord,
- le deuxième élément de blocage (111) est prévu sur une portion latérale (11) de l'élément de séparation (10, 10'), et
- l'élément de séparation (10, 10') présente un épaulement définissant une surface d'anti-rotation (112) adaptée pour être en regard de ladite surface de guidage (64) quelle que soit la position de l'élément de séparation (10, 10') par rapport au réceptacle (2).

5. Compartiment de rangement (1) selon l'une quelconque des revendications 3 et 4, dans lequel les premiers éléments de blocage se présentent sous la forme d'une série de crans de blocage (61, 71) formés sur une face de la première rainure (60, 70), la face opposée de ladite première rainure (60, 70) étant lisse et formant une surface de glissement (62) pour l'élément de séparation (10, 10'), et dans lequel le deuxième élément de blocage se présente sous la forme d'au moins une saillie de blocage (111, 121) complémentaire prévue sur l'élément de séparation (10, 10').

6. Compartiment de rangement (1) selon la revendication 5, dans lequel la surface de glissement (62) de la première rainure (60) comprend une nervure (63) s'étendant dans la direction de coulissement (X) et faisant saillie de ladite surface de glissement (62) selon la direction de déblocage (Z), et adaptée pour coopérer avec une gorge (113) complémentaire prévue sur l'élément de séparation (10, 10').

7. Compartiment de rangement (1) selon l'une quelconque des revendications 5 et 6, dans lequel les crans (61, 71) de la série de crans de blocage sont adjacents dans la direction de coulissement (X).

8. Compartiment de rangement (1) selon l'une quelconque des revendications 5 à 7, dans lequel l'élément élastique (14, 15, 16, 17, 18, 19) est solidaire suivant la direction de coulissement (X) de l'élément de séparation (10, 10') et prend appui sur la surface de glissement (62, 72) de la première rainure (60, 70).

9. Compartiment de rangement (1) selon la revendication 8, dans lequel l'élément élastique se présente sous la forme d'un ressort à lame (14).

10. Compartiment de rangement (1) selon l'une quelconque des revendication 8 et 9, dans lequel l'élément élastique se présente sous la forme d'une lame flexible (15, 16) présentant une première extrémité (151, 161) reliée à l'élément de séparation (10, 10') et une deuxième extrémité (152, 162) libre, ladite lame flexible (151, 161) prenant appui sur la surface de glissement (62) de la première rainure (60) par l'intermédiaire d'une portion extrême voisine de ladite deuxième extrémité (152, 162).

11. Compartiment de rangement (1) selon la revendication 8, le deuxième élément de blocage (111) est monobloc avec un organe de blocage (110) fixé sur l'élément de séparation (10, 10') au moyen d'un dispositif d'assemblage et/ou l'élément élastique (15, 16, 17) est monobloc avec un organe élastique (150, 160, 170) fixé sur l'élément de séparation (10, 10') au moyen d'un dispositif d'assemblage.

12. Compartiment de rangement (1) selon la revendication 8, dans lequel l'élément élastique (18, 19) prend appui sur la surface de glissement (62) de la première rainure (60) par l'intermédiaire d'un patin de glissement (21) monté mobile en rotation sur l'élément de séparation (10, 10').

13. Compartiment de rangement (1) selon la revendication 8, dans lequel l'élément élastique se présente sous la forme d'une patte flexible (19) comprenant une première extrémité (191) reliée au patin de glissement (21) et une deuxième extrémité (192) libre, ladite patte flexible (19) prenant appui sur l'élément de séparation (10, 10') par l'intermédiaire d'une portion extrême voisine de ladite deuxième extrémité (192).

14. Compartiment selon l'une quelconque des revendications 1 à 13, dans lequel l'élément de séparation (10, 10') passe de la position de blocage à la position de coulissement en étant déplacé vers le fond (4) du réceptacle (2).

15. Compartiment de rangement (1) selon l'une quelconque des revendications 1 à 14, dans lequel le compartiment de rangement (1) comprend une pluralité d'éléments de séparation (10, 10').

16. Véhicule **caractérisé en ce qu'**il comprend un compartiment de rangement (1) selon l'une quelconque des revendications 1 à 15.

## Patentansprüche

1. Staufach (1) für ein Fahrzeug, das Folgendes umfasst:
- einen Behälter (2), der ein Innenvolumen (3), einen Boden (4) und eine Öffnung (5) aufweist, die gegenüber dem Boden (4) gelegen ist;
- mindestens ein Trennelement (10, 10'), das in einer Verschiebungsrichtung (X) verschiebbar und dazu ausgeführt ist, das Innenvolumen (3) des Behälters (2) zu unterteilen, und
- eine Vorrichtung zum Verriegeln des Trennelements (10, 10') bezüglich des Behälters in der Verschiebungsrichtung (X), wobei die Verriegelungsvorrichtung ein erstes Verriegelungselement (61, 71) umfasst, das an dem Behälter (2) und dem Trennelement (10, 10') vorgesehen ist und zum Zusammenwirken mit einem zweiten komplementären Verriegelungselement (111, 121) ausgeführt ist, das an dem jeweils anderen Element - dem Behälter (2) und dem Trennelement (10, 10') - vorgesehen ist,
**dadurch gekennzeichnet, dass** das Trennelement (10, 10') in einer im Wesentlichen senkrecht zur Verschiebungsrichtung (X) verlaufenden Entriegelungsrichtung (Z) zwischen einer Verriegelungsposition beweglich ist, in der das zweite Verriegelungselement (111, 121) mit dem ersten Verriegelungselement (61, 71) in Eingriff gelangt, und einer Verschiebungsposition, in der das zweite Verriegelungselement (111, 121) mit dem ersten Verriegelungselement (61, 71) nicht in Eingriff steht,
und dass das Fach (1) des Weiteren ein elastisches Element (14, 15, 16, 17, 18, 19) umfasst, das das Trennelement (10, 10') in Richtung der Verriegelungsposition belastet.

2. Staufach (1) nach Anspruch 1, das mehrere erste Verriegelungselemente (61, 71) umfasst, die in der Verschiebungsrichtung (X) gleichmäßig verteilt sind.

3. Staufach (1) nach Anspruch 2, bei dem der Behälter (2) eine erste und eine zweite parallele Seitenwand (6,7) aufweist, wobei das Trennelement (10, 10') in der Verschiebungsrichtung (X) durch eine erste und eine zweite Führungsrille (60, 70) geführt wird, die an der ersten bzw. der zweiten Seitenwand (6, 7) des Behälters (2) vorgesehen sind, wobei die ersten Verriegelungselemente (61, 71) mindestens auf der ersten Rille (60, 70) vorgesehen sind, und wobei die Entriegelungsrichtung (Z) im Wesentlichen senkrecht zum Boden (4) des ist.

4. Staufach (1) nach Anspruch 3, bei dem:
- die erste Seitenwand (6) des Behälters (2) einen Rand umfasst, der sich zum Inneren des Behälters (2) erstreckt und eine Führungsfläche (64) aufweist, die die Öffnung (5) begrenzt,
- die ersten Verriegelungselemente (61) an dem Rand vorgesehen sind,
- das zweite Verriegelungselement (111) an einem Seitenabschnitt (11) des Trennelements (10, 10') vorgesehen ist und
- das Trennelement (10, 10') eine Schulter aufweist, die eine Verdrehsicherungsfläche (112) definiert, die dazu ausgeführt ist, sich unabhängig von der Position des Trennelements (10, 10') bezüglich des Behälters (2) gegenüber der Führungsfläche (64) zu befinden.

5. Staufach (1) nach einem der Ansprüche 3 und 4, bei dem die ersten Verriegelungselemente in Form einer Reihe von Verriegelungskerben (61, 71) vorliegen, die auf einer Seite der ersten Rille (60, 70) ausgebildet sind, wobei die der ersten Rille (60, 70) gegenüberliegende Seite glatt ist und eine Gleitfläche (62) für das Trennelement (10, 10') bildet, und wobei das zweite Verriegelungselement in Form mindestens eines komplementären Verriegelungsvorsprungs (111, 121) vorliegt, der an dem Trennelement (10, 10') vorgesehen ist.

6. Staufach (1) nach Anspruch 5, bei dem die Gleitfläche (62) der ersten Rille (60) eine Rippe (63) umfasst, die sich in die Verschiebungsrichtung (X) erstreckt und die Gleitfläche (62) in die Entriegelungsrichtung (Z) vorragen lässt, und dazu ausgeführt ist, mit einer komplementären Nut (113) zusammenzuwirken, die an dem Trennelement (10, 10') vorgesehen ist.

7. Staufach (1) nach einem der Ansprüche 5 bis 6, bei dem die Kerben (61, 71) der Reihe von Verriegelungskerben in der Verschiebungsrichtung (X) nebeneinanderliegen.

8. Staufach (1) nach einem der Ansprüche 5-7, bei dem das elastische Element (14, 15, 16, 17, 18, 19) in der Verschiebungsrichtung (X) fest mit dem Trennelement (10, 10') verbunden ist und an der Gleitfläche (62, 72) der ersten Rille (60, 70) anliegt.

9. Staufach (1) nach Anspruch 8, bei dem das elastische Element in Form einer Blattfeder (14) vorliegt.

10. Staufach (1) nach einem der Ansprüche 8 und 9, bei dem das elastische Element in Form einer flexiblen Zunge (15, 16) vorliegt, die ein erstes Ende (151, 161), das mit dem Trennelement (10, 10') verbunden ist, und ein zweites freies Ende (152, 162) aufweist, wobei die flexible Zunge (151, 161) an der Gleitfläche (62) der ersten Rille (60) über einen Abschnitt anliegt, der sich direkt neben dem zweiten Ende (152, 162) befindet.

11. Staufach (1) nach Anspruch 8, wobei das zweite Verriegelungselement (111) mit einem Verriegelungsglied (110) einstückig ist, das durch eine Anbauvorrichtung an dem Trennelement (10, 10') fixiert ist und/oder das elastische Element (15, 16, 17) mit einem elastischen Glied (150, 160, 170) einstückig ist, das durch eine Anbauvorrichtung an dem Trennelement (10, 10') fixiert ist.

12. Staufach (1) nach Anspruch 8, bei dem das elastische Element (18, 19) über ein Gleitstück (21), das drehbeweglich an dem Trennelement (10, 10') befestigt ist, an der Gleitfläche (62) der ersten Rille (60) anliegt.

13. Staufach (1) nach Anspruch 8, bei dem das elastische Element in Form einer flexiblen Lasche (19) vorliegt, die ein erstes Ende (191) umfasst, das mit dem Gleitstück (21) verbunden ist, und ein freies zweites Ende (192) umfasst, wobei die flexible Lasche (19) über einen Abschnitt, der sich direkt neben dem zweiten Ende (192) befindet, an dem Trennelement (10, 10') anliegt.

14. Fach nach einem der Ansprüche 1 bis 13, bei dem das Trennelement (10, 10') von der Verriegelungsposition in die Verschiebungsposition übergeht, wenn es zum Boden (4) des Behälters (2) verschoben wird.

15. Staufach (1) nach einem der Ansprüche 1 bis 14, bei dem das Staufach (1) mehrere Trennelemente (10, 10') umfasst.

16. Fahrzeug, **dadurch gekennzeichnet, dass** es ein Staufach (1) nach einem der Ansprüche 1-15 umfasst.

## Claims

1. Storage compartment (1) for a vehicle, comprising:
- a receptacle (2) having an interior volume (3), a bottom (4), and an opening (5) situated opposite the bottom (4) ;
- at least one partition member (10, 10') slidably movable in a sliding direction (X) and adapted to partition the interior volume (3) of the receptacle (2), and;
- a locking device for locking the partition member (10, 10') relative to the receptacle in the sliding direction (X), said locking device comprising a first locking member (61, 71) provided on one among the receptacle (2) and partition member (10, 10') and adapted to engage with a complementary second locking member (111, 121) provided on the other among the receptacle (2) and partition member (10, 10');
**characterized in that** the partition member (10, 10') is movable in an unlocking direction (Z) substantially perpendicular to the sliding direction (X), between a locked position where the second locking member (111, 121) engages the first locking member (61, 71) and a sliding position where the second locking member (111, 121) is disengaged from the first locking member (61, 71),
and **in that** the compartment (1) further comprises an elastic member (14, 15, 16, 17, 18, 19) biasing the partition member (10, 10') towards the locked position.

2. Storage compartment (1) according to claim 1, comprising a plurality of first locking members (61, 71) regularly distributed along the sliding direction (X).

3. Storage compartment (1) according to claim 2, wherein the receptacle (2) has first and second parallel side walls (6, 7), wherein the partition member (10, 10') is guided along the sliding direction (X) by first and second guide grooves (60, 70) provided respectively on the first and second side walls (6, 7) of the receptacle (2), the first locking members (61, 71) being provided on at least said first groove (60, 70), and wherein the unlocking direction (Z) is substantially perpendicular to the bottom (4) of the receptacle (2).

4. Storage compartment (1) according to claim 3, wherein:
- the first side wall (6) of the receptacle (2) comprises a flange extending into the interior of said receptacle (2) and having a guide surface (64) defining the opening (5),
- the first locking members (61) are provided on said flange,
- the second locking member (111) is provided on a lateral portion (11) of the partition member (10, 10'), and
- the partition member (10, 10') has a shoulder defining a rotation-preventing surface (112) adapted to face said guide surface (64) regardless of the position of the partition member (10, 10') relative to the receptacle (2).

5. Storage compartment (1) according to any one of claims 3 and 4, wherein the first locking members are in the form of a series of locking notches (61, 71) formed on a face of the first groove (60, 70), the opposing face of said first groove (60, 70) being smooth and forming a sliding surface (62) for the partition member (10, 10'), and wherein the second locking member is in the form of at least one complementary locking projection (111, 121) provided on the partition member (10, 10').

6. Storage compartment (1) according to claim 5, wherein the sliding surface (62) of the first groove (60) comprises a rib (63) extending along the sliding direction (X) and projecting from said sliding surface (62) in the unlocking direction (Z), and adapted to engage with a complementary groove (113) provided on the partition member (10, 10').

7. Storage compartment (1) according to any one of claims 5 and 6, wherein the notches (61, 71) of the series of locking notches are adjacent in the sliding direction (X).

8. Storage compartment (1) according to any one of claims 5 to 7, wherein the elastic member (14, 15, 16, 17, 18, 19) is fixed in the sliding direction (X) of the partition member (10, 10') and bears against the sliding surface (62, 72) of the first groove (60, 70).

9. Storage compartment (1) according to claim 8, wherein the elastic member is in the form of a leaf spring (14).

10. Storage compartment (1) according to any one of claims 8 and 9, wherein the elastic member is in the form of a flexible strip (15, 16) having a first end (151, 161) connected to the partition member (10, 10') and a free second end (152, 162), said flexible strip (151, 161) bearing against the sliding surface (62) of the first groove (60) via an end portion near said second end (152, 162).

11. Storage compartment (1) according to claim 8, the second locking member (111) being integral with a locking element (110) fixed to the partition member (10, 10') by means of an assembly arrangement and/or the elastic member (15, 16, 17) is integral with an elastic element (150, 160, 170) fixed to the partition member (10, 10') by means of an assembly arrangement.

12. Storage compartment (1) according to claim 8, wherein the elastic member (18, 19) bears against the sliding surface (62) of the first groove (60) via a sliding shoe (21) rotatably mounted on the partition member (10, 10').

13. Storage compartment (1) according to claim 8, wherein the elastic member is in the form of a flexible tab (19) comprising a first end (191) connected to the sliding shoe (21) and a free second end (192), said flexible tab (19) bearing against the partition member (10, 10') via an end portion near said second end (192).

14. Compartment according to any one of claims 1 to 13, wherein the partition member (10, 10') is moved from the locked position to the sliding position by being displaced towards the bottom (4) of the receptacle (2).

15. Storage compartment (1) according to any one of claims 1 to 14, wherein the storage compartment (1) comprises a plurality of partition members (10, 10').

16. Vehicle **characterized in that** it comprises a storage compartment (1) according to any one of claims 1 to 15.
